# EUROPEAN PATENT SPECIFICATION

(11) **EP 3 370 496 B1**
(45) Date of publication and mention of the grant of the patent: **22.04.2020**
(21) Application number: 16797731.3
(22) Date of filing: 04.11.2016
(51) Int. Cl.: A01B 43/00

(54) **A SIEVE AND A DEVICE FOR PICKING STONES FROM SOIL**
SIEB UND VORRICHTUNG ZUR AUFNAHME VON STEINEN AUS DEM BODEN
TAMIS ET DISPOSITIF POUR SAISIR DES PIERRES SUR LE SOL

(30) Priority: 07.11.2015 DK 201500699
(43) Date of publication of application: 12.09.2018
(73) Proprietor: CNH Industrial Danmark A/S, 2650 Hvidovre (DK)
(72) Inventor: MARTIKAINEN, Esko, FI-23100 Mynämäki (FI); MICHALAK, Adam, PL-99-300 Kutno (PL)
(74) Representative: CNH Industrial IP Department
(86) International application number: PCT/DK2016/050355
(87) International publication number: WO 2017/076415

(56) References cited:
- FR-A1- 2 656 764
- US-A- 540 148
- US-A- 1 442 979
- US-B1- 7 066 275
- US-B1- 8 745 903

## Description

### Field of the invention

The present invention relates to the field of agriculture. More specifically, the present invention relates in a first aspect to a sieve for picking stones from soil.

In a second aspect the present invention relates to a stone picking device for picking and colleting stones from soil.

In a third aspect the present invention relates to a use of a sieve according to the first aspect of the present invention or of a device according to the second aspect of the present invention for stone picking stones from soil

In a fourth aspect the present invention relates to method for stone picking stones from soil.

### Background of the invention

In the field of agriculture it has for centuries been acknowledged that in order to obtain a good yield of crops in terms of quantity and quality it will be necessary at regular intervals to provide a conditioning of the soil in which the crops are to be grown.

Such conditioning may relate to ploughing, cultivation, harrowing etc. The conditioning serves the purpose of aerating the soil, destroying the rooting of weed and to burry residues of last year's crops.

Conditionings like ploughing, cultivation and harrowing are typically performed by towing an agricultural tool or implement behind a tractor.

In case the soil contains large stones of rocks the process of cultivating the soil will inevitably result in damaging the soil working tools of such cultivators.

Furthermore, the presence of stones and rocks in agricultural soil will in itself be detrimental in respect of efficiency of crop yield in that the individual stones take up space in the soil which otherwise could be utilized by growing crops.

Stones in soil likewise pose a problem in the field of gardening, horticulture, road construction, beach cleaning and other material handling.

In order to reduce the amount of stones in soil a range of different tools have been developed, all serving the purpose of removing stones from the soil.

Some of these tools comprise a sieve which comprises a number of parallel bars. The sieve is intended for moving through the soil, e.g. by being towed by a tractor. The distance between adjacent bars determines the coarseness of the sieve and hence determines the threshold between stone sizes to be picked or collected and sizes of material to be left in the soil.

However, these tools all suffer from drawbacks relating to a tendency of the sieve to let stones clog the sieve because stones, due to an inefficient design of these sieves, are prone to get stuck in the gap between adjacent bars of the sieve.

One such tool is disclosed in US8745903 and in US 540 148. US 540 148 discloses an apparatus in the form of a combined stone gatherer and potato digger. This apparatus comprises a number of bars arranged in parallel on two crossbars in a frame. Each bar is having an L-shaped cross-section. In the apparatus of US 540 148 the bars are not grouped in pairs by providing a connection of the lower ends of each of two adjacent bars nor does this document disclose that the smallest distance between two adjacent bars is only being present at a leading surface thereof. Thereby, stones are prone to get stuck in the gap between adjacent bars at the lower ends thereof.

Accordingly, there exists a need for improving stone picking of stones from soil avoiding the disadvantages of the prior art.

It is an objective of the present invention to provide a solution to the above stated problem in order to reduce or even eliminate the disadvantages encountered by the prior art stone picking devices.

### Brief description of the invention

This objective is attained with the present invention in its first, second, third, and fourth aspect.

Accordingly, the present invention relates in a first aspect to a sieve for stone picking stones from soil, said sieve in the orientation intended for use comprising:
a number of bars, wherein each bar is extending in a longitudinal direction between a lower end configured to be at least partly submerged in soil, and an upper end;
wherein each said bar comprises a leading surface extending a distance from a first edge to a second edge of said leading surface of said bar;
wherein each said bar comprises a trailing surface;
wherein one or more sets of two adjacent bars, preferably all sets of two adjacent bars, of the sieve are being grouped in pairs in such a way that the lower end of two adjacent bars are being connected to each other;
**characterized in** that in respect of two specific adjacent bars, preferably in respect of any two adjacent bars, the geometry of the bars and the sieve is configured in such a way that the smallest distance between said two adjacent bars is only being present at the leading surface of said two adjacent bars.

The present invention relates in a second aspect to a stone picking device for picking and colleting stones from soil;
wherein said stone picking device comprises a frame;
wherein said frame comprises a sieve according to any of the preceding claims;
wherein said frame comprises stone conveying means for removing stones from an area located at an upper end of said bars of said sieve.

In its third aspect the present invention relates to a use of a sieve according to the first aspect of the present invention or of a device according to the second aspect of the present invention for stone picking stones from soil.

In a fourth aspect, the present invention relates to a method for stone picking stones from soil, wherein said method comprises:
i) providing a sieve according to the first aspect of the present invention;
ii) arranging said sieve in such a way that its lower end is at least partly being submerged into the surface of soil;
iii) moving the sieve through the soil in a direction defined by the leading surface of the bars of the sieve;
iv) collecting and removing stones having a size preventing them from passing between two adjacent bars, while allowing soil material having smaller sizes to pass between two adjacent bars.

The present invention in its various aspects provides for enhanced stone picking efficiency. This result is brought about by virtue of the special design of the individual bars of the sieve which to a large extent avoids the clogging of stones between individual bars of the sieve.

### Brief description of the figures

Fig. 1 is a perspective view of a sieve according to the first aspect of the present invention.
Fig. 2 is a side view illustrating the working mode of the sieve according to the first aspect of the present invention.
Fig. 3 is a top view illustrating one embodiment of a sieve according to the first aspect of the present invention.
Fig. 4 is a top view illustrating another embodiment of a sieve according to the first aspect of the present invention.
Fig 5a shows a cross-section of the bars of one embodiment of a sieve according to the present invention.
Fig 5b shows a cross-section of the bars of another embodiment of a sieve according to the present invention.
Fig 5c shows a cross-section of the bars of yet another embodiment of a sieve according to the present invention.
Fig. 6 is a schematic illustration showing a top view of a stone picking device according to the second aspect of the present invention.

### Detailed description of the invention

### The first aspect of the present invention

In a first aspect, the present invention relates to a sieve for stone picking stones from soil, said sieve in the orientation intended for use comprising:
a number of bars, wherein each bar is extending in a longitudinal direction between a lower end configured to be at least partly submerged in soil, and an upper end;
wherein each said bar comprises a leading surface extending a distance from a first edge to a second edge of said leading surface of said bar;
wherein each said bar comprises a trailing surface;
wherein one or more sets of two adjacent bars, preferably all sets of two adjacent bars, of the sieve are being grouped in pairs in such a way that the lower end of two adjacent bars are being connected to each other;
**characterized in** that in respect of two specific adjacent bars, preferably in respect of any two adjacent bars, the geometry of the bars and the sieve is configured in such a way that the smallest distance between said two adjacent bars is only being present at the leading surface of said two adjacent bars.

The special design of the geometry of the bars provides for avoiding, to a great extent, the clogging of stones in the sieve.

In the present description and in the appended claims it should be understood that the term *"the geometry of the bars and the sieve is configured in such a way that the smallest distance between said two adjacent bars is being present at the leading surface of said two adjacent bars"* preferably is to be interpreted in such a way that when comparing the distance between two adjacent bars, at the leading surface thereof and at a trailing surface thereof, respectively, the measurement is performed at an equal longitudinal position of the two adjacent bars.

In one embodiment of the first aspect of the present invention one or more of said bars, preferably all of said bars, are exhibiting a concave curvature in the lengthwise direction along the leading surface of said bars.

In one embodiment of the first aspect of the present invention one or more of said bars, preferably all of the bars, are exhibiting a convex curvature in the lengthwise direction along the trailing surface of said bars. Such curvatures will provide for improved flow of stones, being picked up, along the bars.

In one embodiment the number of bars is 4 - 210 bars, such a 10 - 200 bars, for example 20 - 190 bars, such as 30 - 180 bars, for example 40 - 170 bars, such as 50 - 160 bars, for example 60 - 150 bars, such as 70 - 140 bars, such as 80 - 130 bars, e.g. 90 - 120 bars or 100 - 110 bars. These numbers will provide for great efficiency because these numbers secure a significant working width.

In one embodiment of this embodiment said bars are being grouped in pairs in such a way that the lower ends of two adjacent bars are being connected to each other via an end part so as to form a U-shape end of said two adjacent bars. Connecting the bars in pairs at a lower end thereof provides for enhanced strength of the sieve in a situation where the lower ends are being moved through soil.

In one embodiment of the first aspect of the present invention said bars are being reinforced by being connected to a bracket.

In one embodiment of this embodiment said bracket is mounted on a trailing surface of said bars. Connecting the bars to a bracket provides for enhanced strength of the sieve.

In one embodiment of the first aspect of the present invention said bars are being parallel arranged on said sieve.

In one embodiment of the first aspect of the present invention said bars are having a longest extension of 0.5 - 2.0 m, such as 0.6 - 1.9 m, for example 0.7 - 1.8 m, e.g. 0.8 - 1.7 m, for example 0.9 - 1.6 m, such as 1.0 - 1.5 m, for example 1.1 - 1.4 m or 1.2 - 1.3 m. These embodiments have proven to provide for efficient stone trapping.

In one embodiment of the first aspect of the present invention the thickness of the bars, in a transverse direction relative to the intended direction of movement, is 10 - 65 mm, such as 15 - 60 mm, for example 20 - 55 mm, e.g. 25 - 50 mm, such as 30 - 45 mm or 35 - 40 mm. These dimensions secure sufficient strength of the sieve.

In one embodiment of the first aspect of the present invention the mutual distance d between a bar and its adjacent bar, in respect of one or more of said bars, preferably in respect of all said bars, measured either at the leading surface or at the trailing surface, varies along the length of said bar.

In one embodiment of this embodiment the mutual distance d between a bar and its adjacent bar varies along the length of said bar so as to increase when going from a lower end of said bar to an upper end of said bar; or so as to decrease when going from a lower end of said bar to an upper end of said bar.

In one embodiment of the first aspect of the present invention and in respect of one or more of said bars, preferably in respect of all said bars, the cross section of said bar(s) is defining the shape of an isosceles trapezoid having side legs of equal length, wherein the longest base of the isosceles trapezoid is forming the leading surface of the bar and wherein the shortest base of the isosceles trapezoid is forming the trailing surface of the bar, thus extending between a first edge and a second edge of said trailing surface of said bar.

In one embodiment of the first aspect of the present invention, and in respect of one or more of said bars, preferably in respect of all said bars, the cross section of said bar(s) is defining the shape of a semicircle, wherein the diameter of the semicircle is forming the leading surface of the bar and wherein the curved perimeter of the semicircle is forming the trailing surface of the bar.

In one embodiment of the first aspect of the present invention and in respect of one or more of said bars, preferably in respect of all said bars, the cross section of said bar(s) is defining the shape of a triangle, wherein one edge of the triangle is forming the leading surface of the bar, and wherein part of two edges and one vertex of the triangle is forming the trailing surface of the bar. These geometries of the cross sections provide for an efficient design in respect of avoiding clogging of stones.

In one embodiment of the first aspect of the present invention said sieve comprises adjustment means for adjustment of the mutual distances d between two specific adjacent bars, preferably between any two adjacent bars. Such means for adjustment provides for an easy change of the threshold between size of stones to be picked up and size of stones to be left in the soil.

In one embodiment of the first aspect of the present invention and in respect of one or more of said bars, preferably in respect of all said bars, the smallest distance between one edge of the leading surface of a specific bar and the nearest edge of the leading surface of an adjacent bar is 2 - 65 cm, such as 5 - 60 cm, for example 10 - 55 cm, such as 15 - 50 cm, for example 20 - 45 cm, such as 25 - 40 cm or 30 - 35 cm. This distance determines the threshold between size of stones to be picked up and size of stones to be left in the soil.

### The second aspect of the present invention

In a second aspect, the present invention relates to a stone picking device for picking and colleting stones from soil;
wherein said stone picking device comprises a frame;
wherein said frame comprises a sieve according to the first aspect of the present invention;
wherein said frame comprises stone conveying means for removing stones from an area located at an upper end of said bars of said sieve. The stone picking device according to the second aspect of the present invention provides for easy collection of stones being picked up by the sieve.

In one embodiment of the second aspect of the present invention said stone conveying means being a conveyor belt.

In one embodiment of the second aspect of the present invention the stone picking device further comprising depth adjustment means for adjusting the depth of submersion into soil of the lower end of said bars of said sieve. This embodiment provides flexibility in the operation of the device.

In one embodiment of the second aspect of the present invention, the stone picking device further comprising a hopper for storing the stones, removed by the stone conveying means. A hopper provides for easy disposal of the stones being collected from the soil.

In one embodiment of the second aspect of the present invention said frame comprises one or more wheels.

In one embodiment of the second aspect of the present invention said device is being a self-propelled device or wherein said device comprises coupling means for enabling coupling of the device to a towing tractor or the like.

These embodiments provide for powered towing of the device.

In one embodiment of the second aspect of the present invention said device further comprising soil loosening and/or stone lifting means arranged in front of the sieve, relative to the intended direction of movement thereof.

In one embodiment of this embodiment said soil loosening and/or stone lifting means comprises shears arranged on an axle and being configured to be able to rotate with the view to loosen soil and/or to lift from the soil, stones being present in the soil. Such soil loosening and/or stone lifting means provides for better capture of stones by the sieve.

### The third aspect of the present invention

In a third aspect, the present invention relates to a use of a sieve according to the first aspect of the present invention or of a device according to the second aspect of the present invention for stone picking stones from soil.

### The fourth aspect of the present invention

In a fourth aspect, the present invention relates to method for stone picking stones from soil, wherein said method comprises:
i) providing a sieve according to the first aspect of the present invention;
ii) arranging said sieve in such a way that its lower end is at least partly being submerged into the surface of soil;
iii) moving the sieve through the soil in a direction defined by the leading surface of the bars of the sieve;
iv) collecting and removing stones 300 having a size preventing them from passing between two adjacent bars, while allowing soil material having smaller sizes to pass between two adjacent bars.

In one embodiment of the fourth aspect of the present invention the method is performed using a device according to the first aspect of the present invention.

In one embodiment the speed of movement of the sieve is 1 - 14 km/h, such as 2 - 13 km/h, for example 3 - 12 km/h, for example 4 - 11 km/h, such as 5 - 10 km/h, for example 6 - 9 km/h or 7 - 8 km/h.

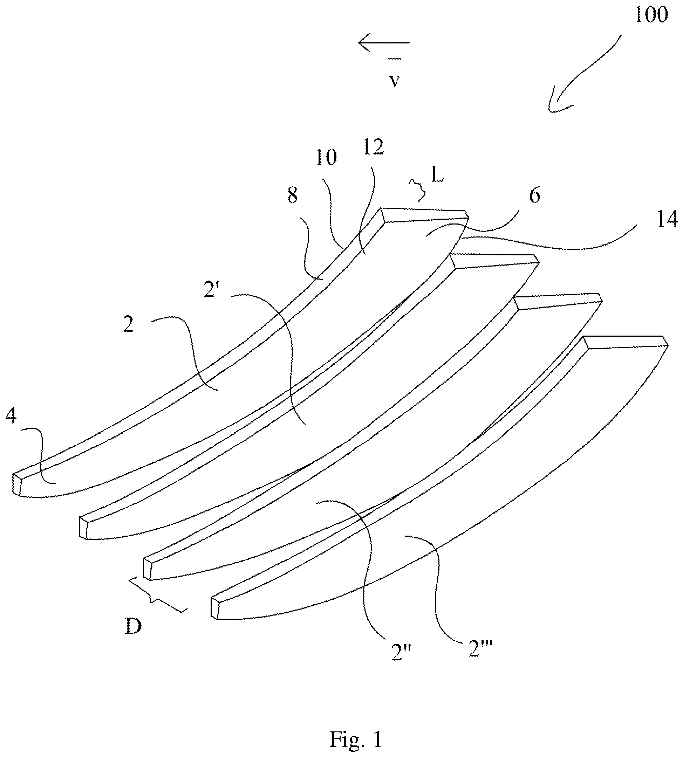

Referring now in details to the drawings for the purpose of illustrating preferred embodiments of the present invention, Fig. 1 illustrates a perspective view of the bars of a sieve according to a first aspect of the present invention. The sieve 100 is for stone picking stones from soil. The sieve comprises in the orientation intended for use four bars 2,2',2",2"', wherein each bar is extending in a longitudinal direction between a lower end 4 configured to be at least partly submerged in soil, and an upper end 6.

Each of the bars comprises a leading surface 8 extending a distance L from a first edge 10 to a second edge 12 of the leading surface of the bar. Furthermore, each bar comprises a trailing surface 14.

The sieve 100 is characterized in that that in respect of any two specific adjacent bars 2,2',2",2"', the geometry of the bars and the sieve is configured in such a way that the smallest distance between said two adjacent bars is being present at the leading surface of said two adjacent bars.

During the intended use, the lower part of the sieve 100, that is the lower part 4 of each bar is at least partly submerged into soil which is to be cleaned from stones and the sieve is moved through the soil in the direction defined by the leading surface 4 of the bars. This direction is in fig. 1 indicated by the velocity vector v.

It can be seen in fig. 1 that the cross section of each bar 2,2',2",2"' is wedged and that the leading surface 4 is having a larger extension in a transverse direction, relative to the intended direction of movement of the sieve at the leading surface thereof, compared to the trailing surface of the bars. In this way, the smallest distance D between any two adjacent bars is being present at the leading surface of said two adjacent bars.

Such a design avoids the clogging problems of the prior art designs of sieves for stone picking soil.

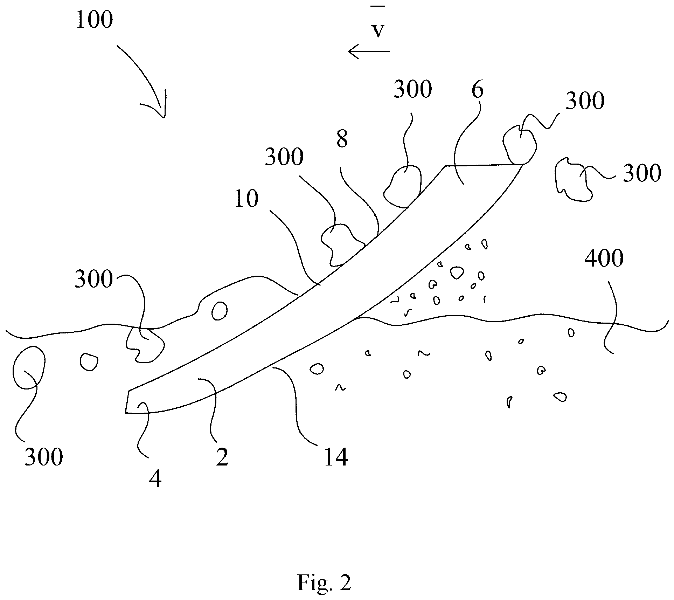

Fig. 2 is a plan view illustrating the working mode of the sieve 100 according to the first aspect of the present invention.

A sieve 100 comprising a number of individual bars 2,2',2",2" arranged parallel to each other (only one bar is visible in the side view of fig. 2) is moved through the soil 400 containing stones 300, sand, gravel and debris at velocity v in such a way that a lover end 4 of each bar 2,2',2",2"' is submerged into the soil. As each bar is having a predetermined mutual distance d to any adjacent bar, the "mesh size" of the sieve can be determined.

In case the smallest distance between any two adjacent bars is being D no stone having a largest extension greater than D will be able to pass though the space between two adjacent bars 2,2'.

On the contrary any stone, sand, gravel or debris having an extension smaller than D will be able to pass through the space defined by two adjacent bars 2.2'.

In this way, the movement of the sieve 100 may be used for stone picking of stones in soil with the view to remove any stones having a size larger than a predetermined threshold size.

In fig. 2 is shown that three stones 300 have been picked by the sieve 100 and is in the process of being moved to the upper part 6 of the bars and subsequently being moved backwards in order to exit the sieve upon which they will fall by the action of gravity. At this point the stones 300 may be picked up, e.g. by a conveyor belt and brought to a preliminary storage facility, such as a hopper in the vicinity of the sieve.

The movement of the stones up the leading surface of the sieve is brought about by the typical built-up of soil immediately in front of the sieve as it moves through the soil.

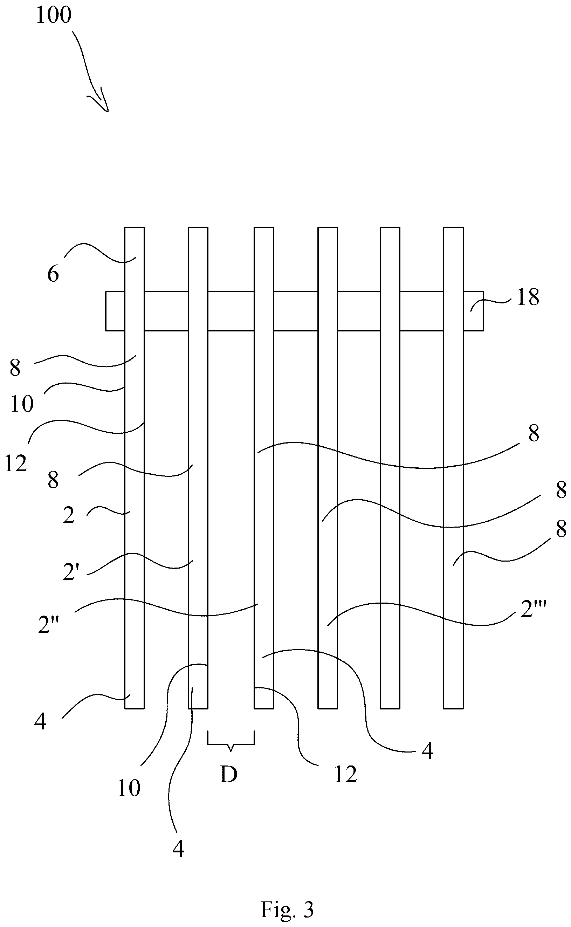

Fig. 3 is a top view of one embodiment of the sieve.

Fig. 3 shows the sieve 100 comprising six bars 2,2',2",2"'. Each bar comprises a lower end 4 and an upper end 6. The leading surface 8 of each bar comprises a first edge 10 and a second edge 12.

The smallest distance D between any two adjacent bars 2',2" is present between a first edge 10 of the leading surface 4 of one bar 2' and a second edge 12 of the leading surface of the adjacent bar 2".

A bracket 18 is provided for reinforcing the sieve and for holding together the individual bars 2,2',2",2"' making up the sieve.

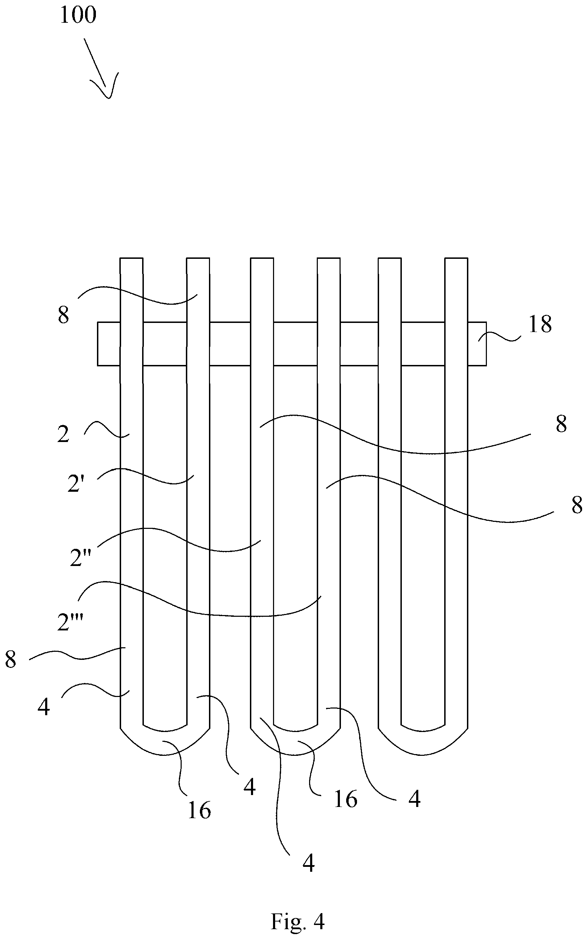

Fig. 4 shows an alternative embodiment of the embodiment shown in fig. 3. Fig 4 shows the sieve 100 comprising six bars 2,2',2",2"'. Each bar comprises a lower end 4 and an upper end 6.

Fig. 4 shows that in respect of two adjacent bars of the sieve, these two bars are being connected to each other by an end part 16.

In this way, the bars are being grouped in pairs in such a way that the lower end 4 of two adjacent bars 2,2' and 2", 2'" respectively are being connected to each other so as to form a U-shape end of said two adjacent bars.

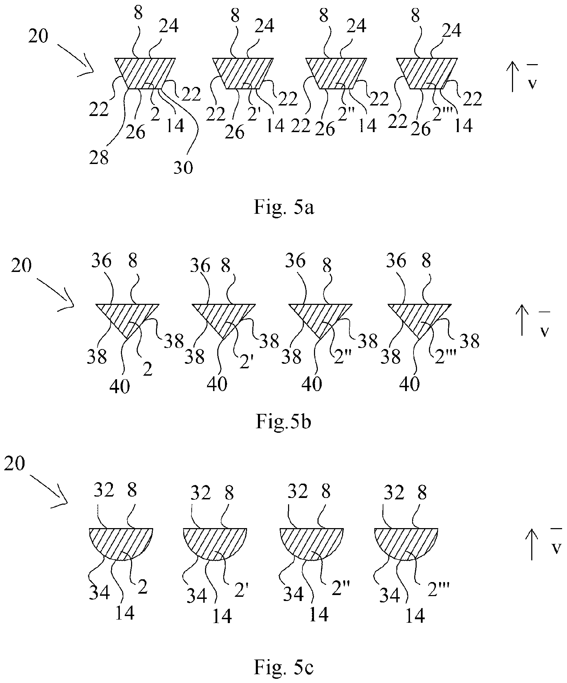

Fig 5a, 5b and 5c illustrate various geometries of preferred cross-sections 20 of the bars 2,2',2",2"' of the sieve 100 according to the first aspect of the present invention.

Fig 5a shows a cross-section of the bars 2,2',2",2"' of a sieve comprising four bars. The bars 2,2',2",2"' are each having a cross-section with the geometry of a an isosceles trapezoid. The trapezoid is having side legs 22 of equal length; the longest base 24 of the isosceles trapezoid is forming the leading surface 8 of the bar and the shortest base 26 of the isosceles trapezoid is forming the trailing surface 14 of the bar, thus extending between a first edge 28 and a second edge 30 of said trailing surface of that bar.

Fig 5b shows a cross-section of the bars 2,2',2",2"' of a sieve comprising four bars. The bars 2,2',2",2"' are each having a cross-section with the geometry of a triangle, wherein one edge 36 of the triangle is forming the leading surface 8 of the bar, and wherein part of two edges 38 and one vertex 40 of the triangle is forming the trailing surface 14 of the bar.

Fig 5c shows a cross-section of the bars 2,2',2",2"' of a sieve comprising four bars. The bars 2,2',2",2"' are each having a cross-section with the geometry of a semicircle, The diameter 32 of the semicircle is forming the leading surface 8 of the bar and wherein the curved perimeter 34 of the semicircle is forming the trailing surface 14 of the bar.

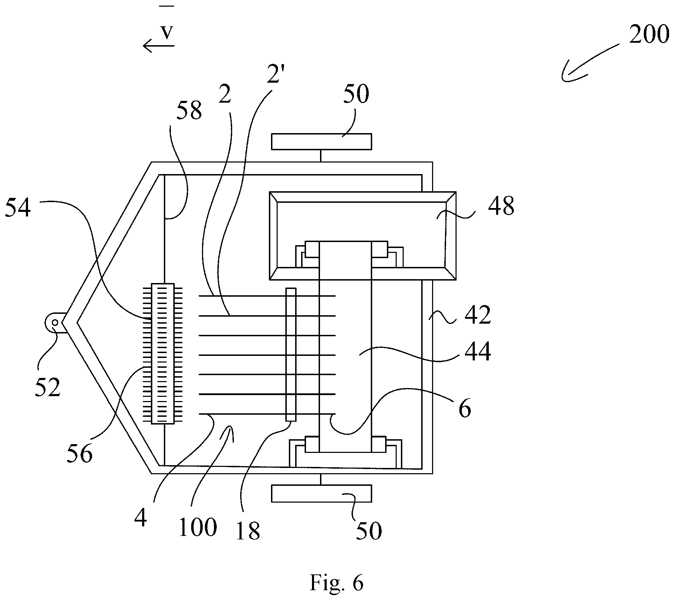

Fig. 6 is a schematic illustration showing a top view of a stone picking device 200. The stone picking device 200 comprises a frame 42. The frame comprises a sieve 100.

The sieve 100 is arranged on the frame 42 in such a way that a lower end 4 of the bars of the sieve is located relatively low and forward compared to the upper end 6 of the bars of the sieve.

Furthermore, the frame comprises stone conveying means 44 in the form of a conveyor belt for removing stones from an area located at an upper end 6 of said bars of said sieve.

The conveyor belt is arranged immediately below an upper end 6 of the bars 2,2' of the sieve 100.

The stones conveyed by the conveying means 44, are conveyed to a hopper 48 for storing the stones removed by the stone conveying means.

The frame is suspended by wheels 50 and the frame comprises coupling means 52 for allowing the device to be towed by a tractor or the like.

Furthermore, fig 6 shows that the device 200 comprises soil loosening and/or stone lifting means 54 arranged in front of the sieve 100, relative to the intended direction of movement thereof.

The soil loosening and/or stone lifting means 54 comprises shears 56 arranged on an axle 58. The axle 58 is being configured to be able to rotate with the view to loosen soil and/or to lift from the soil, stones being present in the soil.

The device 200 is intended to be towed behind the tractor in the direction of movement defined by velocity vector v. The soil loosening and/or stone lifting means 54 arranged in front of the sieve 100 allows loosening of the soil and the stones. Subsequently, the stones being too large to fall and passing the space between two adjacent bars 2,2' of the sieve 100 will be lifted by the bars of the sieve and end up on the conveyor belt 44, whereafter they will be transported to the hopper 48.

The stones, sand, gravel and debris having sizes enabling passage through the space between two adjacent bars 2,2' of the sieve 100 will pass these.

Accordingly, the device 200 allows for easy and efficient stone picking from soil without the disadvantage of clogging the sieve of the device.

### List of reference numerals

2,2',2",2'" Bar
4 Lower end of bar
6 Upper end of bar
8 Leading surface of bar
10 First edge of leading surface of bar
12 Second edge of leading surface of bar
14 Trailing surface of bar
16 End part connecting two adjacent bars at a lower end thereof
18 Bracket
20 Cross-section of bar
22 Side legs of trapezoid
24 Longest base of trapezoid
26 Shortest base of trapezoid
28 First edge of trailing surface of bar
30 Second edge of trailing surface of bar
32 Diameter of semicircle
34 Curved perimeter of semicircle
36,38 Edges of triangle
40 Vertex of triangle
42 Frame of stone picking device
44 Stone conveying means
46 Depth adjustment means
48 Hopper
50 Wheels
52 Coupling means
54 Soil loosening and/or stone lifting means
56 Shear
58 Axle
d Mutual distance between two adjacent bars
D Smallest distance between two adjacent bars
L Distance between first edge and second edge of leading surface of bar
v Velocity vector of intended movement of sieve
100 Sieve
200 Stone picking device
300 Stone
400 Soil

## Claims

1. A sieve (100) for stone picking stones (300) from soil, said sieve in the orientation intended for use comprising:
a number of bars (2,2',2",2"'), wherein each bar is extending in a longitudinal direction between a lower end (4) configured to be at least partly submerged in soil, and an upper end (6);
wherein each said bar comprises a leading surface (8) extending a distance (L) from a first edge (10) to a second edge (12) of said leading surface of said bar;
wherein each said bar comprises a trailing surface (14);
wherein one or more sets of two adjacent bars (2,2',2",2"'), preferably all sets of two adjacent bars, of the sieve are being grouped in pairs in such a way that the lower end (4) of two adjacent bars are being connected to each other
**characterized in that** in respect of two specific adjacent bars (2,2',2",2"'), preferably in respect of any two adjacent bars, the geometry of the bars and the sieve is configured in such a way that the smallest distance (D) between said two adjacent bars is only being present at the position of the leading surface of said two adjacent bars.

2. A sieve (100) according to claim 1, wherein one or more of said bars (2,2',2",2"'), preferably all of said bars, are exhibiting a concave curvature in the lengthwise direction along the leading surface (8) of said bars; and/or
wherein one or more of said bars (2,2',2",2"'), preferably all of the bars, are exhibiting a convex curvature in the lengthwise direction along the trailing surface (14) of said bars.

3. A sieve (100) according to any of the preceding claims, wherein said bars (2,2',2",2"') are being reinforced by being connected to a bracket (18); said bracket optionally is being mounted on a trailing surface (14) of said bars.

4. A sieve (100) according to any of the preceding claims, wherein said bars are being parallel arranged on said sieve.

5. A sieve (100) according to any of the preceding claims, wherein said bars (2,2',2",2"') are having a longest extension of 0.5 - 2.0 m, such as 0.6 - 1.9 m, for example 0.7 - 1.8 m, e.g. 0.8 - 1.7 m, for example 0.9 - 1.6 m, such as 1.0 - 1.5 m, for example 1.1 - 1.4 m or 1.2 - 1.3 m; and/or
wherein the thickness of the bars 2,2',2",2"', in a transverse direction relative to the intended direction of movement, is 10 - 65 mm, such as 15 - 60 mm, for example 20 - 55 mm, e.g. 25 - 50 mm, such as 30 - 45 mm or 35 - 40 mm; and/or
wherein in respect of one or more of said bars (2,2',2",2"'), preferably in respect of all said bars, the smallest distance (D) between one edge of the leading surface of a specific bar and the nearest edge of the leading surface of an adjacent bar is 2 - 65 cm, such as 5 - 60 cm, for example 10 - 55 cm, such as 15 - 50 cm, for example 20 - 45 cm, such as 25 - 40 cm or 30 - 35 cm.

6. A sieve (100) according to any of the preceding claims, wherein in respect of one or more of said bars (2,2',2",2"'), preferably in respect of all said bars, the mutual distance (d) between a bar and its adjacent bar, measured either at the leading surface or at the trailing surface varies along the length of said bar;
wherein the mutual distance (d) between a bar (2,2',2",2"') and its adjacent bar optionally varies along the length of said bar so as to increase when going from a lower end (4) of said bar to an upper end (6) of said bar; or so as to decrease when going from a lower end (4) of said bar to an upper end (6) of said bar.

7. A sieve (100) according to any of the preceding claims, wherein in respect of one or more of said bars (2,2',2",2"'), preferably in respect of all said bars, the cross section (20) of said bar(s) is defining the shape of an isosceles trapezoid having side legs (22) of equal length, wherein the longest base (24) of the isosceles trapezoid is forming the leading surface (8) of the bar and wherein the shortest base (26) of the isosceles trapezoid is forming the trailing surface (14) of the bar, thus extending between a first edge (28) and a second edge (30) of said trailing surface of said bar; or
wherein in respect of one or more of said bars (2,2',2",2"'), preferably in respect of all said bars, the cross section (20) of said bar(s) is defining the shape of a semicircle, wherein the diameter (32) of the semicircle is forming the leading surface (8) of the bar and wherein the curved perimeter (34) of the semicircle is forming the trailing surface (14) of the bar; or
wherein in respect of one or more of said bars (2,2',2",2"'), preferably in respect of all said bars, the cross section (20) of said bar(s) is defining the shape of a triangle, wherein one edge (36) of the triangle is forming the leading surface (8) of the bar, and wherein part of two edges (38) and one vertex (40) of the triangle is forming the trailing surface (14) of the bar.

8. A sieve (100) according to any of the preceding claim, wherein said sieve comprises adjustment means for adjustment of the mutual distances d between two specific adjacent bars (2,2',2",2"'), preferably between any two adjacent bars.

9. A stone picking device (200) for picking and colleting stones (300) from soil;
wherein said stone picking device comprises a frame (42);
wherein said frame comprises a sieve (100) according to any of the preceding claims;
wherein said frame comprises stone conveying means (44) for removing stones from an area located at an upper end (6) of said bars of said sieve.

10. A stone picking device (200) according to claim 9 further comprising depth adjustment means (46) for adjusting the depth of submersion into soil of the lower end (4) of said bars of said sieve.

11. A stone picking device (200) according to claim 9 or 10 further comprising a hopper (48) for storing the stones removed by the stone conveying means; and/or
wherein said stone conveying means being a conveyor belt; and/or
wherein said frame comprises one or more wheels (50); and/or
wherein said device is being a self-propelled device or wherein said device comprises coupling means (52) for enabling coupling of the device to a towing tractor or the like; and/or
wherein said device further comprising soil loosening and/or stone lifting means (54) arranged in front of the sieve (100), relative to the intended direction of movement thereof; said soil loosening and/or stone lifting means (54) optionally comprises shears (56) arranged on an axle (58) and being configured to be able to rotate with the view to loosen soil and/or to lift from the soil, stones being present in the soil.

12. Use of a sieve (100) according to any of the claims 1- 8 or of a device (200) according to any of the claims 9 - 11 for stone picking stones (300) from soil.

13. A method for stone picking stones from soil, wherein said method comprises:
i) providing a sieve (100) according to any of the claims 1 - 8;
ii) arranging said sieve in such a way that its lower end is at least partly being submerged into the surface of soil;
iii) moving the sieve through the soil in a direction defined by the leading surface of the bars of the sieve (100);
iv) collecting and removing stones (300) having a size preventing them from passing between two adjacent bars (2,2',2",2"'), while allowing soil material having smaller sizes to pass between two adjacent bars (2,2',2",2"').

14. A method according to claim 13 using a device (200) according to any of the claims 9 -11.

## Patentansprüche

1. Sieb (100) zur Entnahme von Steinen (300) aus Erdboden, wobei das Sieb in der zum Gebrauch vorgesehenen Ausrichtung umfasst:
eine Anzahl an Stäben (2,2',2",2"'), wobei jeder Stab (2,2',2",2"') sich in einer Längsrichtung zwischen einem unteren Ende (4), das gestaltet ist, um zumindest teilweise in Erdboden einzutauchen, und einem oberen Ende (6) erstreckt;
wobei jeder Stab (2,2',2",2"') eine führende Fläche (8) umfasst, die sich über eine Distanz (L) von einer ersten Kante (10) zu einer zweiten Kante (12) der führenden Fläche (8) des Stabes (2,2',2",2"') erstreckt;
wobei jeder Stab (2,2',2",2"') eine nachfolgende Fläche (14) umfasst;
wobei eine oder mehrere Gruppen von zwei benachbarten Stäben (2,2',2",2"'), bevorzugt alle Gruppen von zwei benachbarten Stäben (2,2',2",2"'), des Siebes (100) derart paarweise gruppiert sind, dass die unteren Ende (4) von zwei benachbarten Stäben (2,2',2",2"') miteinander verbunden sind;
**dadurch gekennzeichnet, dass**
in Bezug auf zwei spezifische benachbarte Stäbe (2,2',2",2"'), bevorzugt in Bezug auf jede zwei benachbarten Stäbe (2,2',2",2"'), die Geometrie der Stäbe (2,2',2",2"') und des Siebes (100) derart gestaltet ist, dass der kleinste Abstand (D) zwischen den zwei benachbarten Stäben (2,2',2",2"') nur an der Stelle der führenden Fläche (8) der zwei benachbarten Stäbe (2,2',2",2"') vorhanden ist.

2. Sieb (100) nach Anspruch 1, wobei einer der oder mehrere der Stäbe (2,2',2",2"'), bevorzugt alle Stäbe (2,2',2",2"'), eine konkave Krümmung in der Längsrichtung entlang der führenden Fläche (8) der Stäbe (2,2',2",2"') aufweisen; und/oder
wobei einer der oder mehrere der Stäbe (2,2',2",2"'), bevorzugt alle Stäbe (2,2',2",2"'), eine konvexe Krümmung in der Längsrichtung entlang der nachfolgenden Fläche (14) der Stäbe (2,2',2",2"') aufweisen.

3. Sieb (100) nach einem der vorangehenden Ansprüche, wobei die Stäbe (2,2',2",2"') dadurch verstärkt sind, dass sie mit einer Klammer (18) verbunden sind, wobei die Klammer (18) optional an einer nachfolgenden Fläche (14) der Stäbe (2,2',2",2"') befestigt ist.

4. Sieb (100) nach einem der vorangehenden Ansprüche, wobei die Stäbe (2,2',2",2"') an dem Sieb (100) parallel angeordnet sind.

5. Sieb (100) nach einem der vorangehenden Ansprüche, wobei die Stäbe (2,2',2",2"') eine längste Erstreckung von 0,5-2,0 m aufweisen, wie zum Beispiel 0,6-1,9 m, zum Beispiel 0,7-1,8 m, zum Beispiel 0,8-1,7 m, zum Beispiel 0,9-1,6 m, wie zum Beispiel 1,0-1,5 m, zum Beispiel 1,1-1,4 m oder 1,2-1,3 m; und/oder
wobei die Dicke der Stäbe (2,2',2",2"') in einer Querrichtung relativ zu der vorgesehenen Bewegungsrichtung 10-65 mm ist, wie zum Beispiel 15-60 mm, zum Beispiel 20-55 mm, zum Beispiel 25-50 mm, wie zum Beispiel 30-45 mm oder 35-40 mm; und/oder
wobei in Bezug auf einen der oder mehrere der Stäbe (2,2',2",2"'), bevorzugt in Bezug auf alle Stäbe (2,2',2",2"'), der kleinste Abstand (D) zwischen einer Kante der führenden Fläche (8) eines spezifischen Stabs (2,2',2",2"') und der nächstliegenden Kante der führenden Fläche (8) eines benachbarten Stabes (2,2',2",2"') 2-65 cm ist, wie zum Beispiel 5-60 cm, zum Beispiel 10-55 cm, wie zum Beispiel 15-50 cm, zum Beispiel 20-45 cm, zum Beispiel 25-40 cm oder 30-35 cm.

6. Sieb (100) nach einem der vorangehenden Ansprüche, wobei in Bezug auf einen der oder mehrere der Stäbe (2,2',2",2"'), bevorzugt in Bezug auf alle Stäbe (2,2',2",2"'), der gegenseitige Abstand (d) zwischen einem Stab (2,2',2",2"') und seinem benachbarten Stab (2,2',2",2"'), der entweder an der führenden Fläche (8) oder an der nachfolgenden Fläche (14) gemessen ist, entlang der Länge des Stabes (2,2',2",2"') variiert;
wobei der gegenseitige Abstand (d) zwischen einem Stab (2,2',2",2"') und seinem benachbarten Stab (2,2',2",2"') optional entlang der Länge des Stabes (2,2',2",2"') variiert, sodass er sich ausgehend von einem unteren Ende (4) des Stabes (2,2',2",2"') hin zu einem oberen Ende (6) des Stabes (2,2',2",2"') erhöht; oder sodass er sich ausgehend von einem unteren Ende (4) des Stabes (2,2',2",2"') hin zu einem oberen Ende (6) des Stabes (2,2',2",2"') verringert.

7. Sieb (100) nach einem der vorangehenden Ansprüche, wobei in Bezug auf einen der oder mehrere der Stäbe (2,2',2",2"'), bevorzugt in Bezug auf alle Stäbe (2,2',2",2"'), der Querschnitt (20) des Stabes oder der Stäbe (2,2',2",2"') die Gestalt eines gleichschenkligen Trapezes definiert, das Seitenschenkel (22) von gleicher Länge aufweist, wobei die längste Grundfläche (24) des gleichschenkligen Trapezes die führende Fläche (8) des Stabes (2,2',2",2"') bildet und wobei die kürzeste Grundfläche (26) des gleichschenkligen Trapezes die nachfolgende Fläche (14) des Stabes (2,2',2",2"') bildet, wodurch sie sich zwischen einer ersten Kante (28) und einer zweiten Kante (30) der nachfolgenden Fläche (14) des Stabes (2,2',2",2"') erstreckt; oder
wobei in Bezug auf einen der oder mehrere der Stäbe (2,2',2",2"'), bevorzugt in Bezug auf alle Stäbe (2,2',2",2"'), der Querschnitt (20) des Stabes oder der Stäbe (2,2',2",2"') die Gestalt eines Halbkreises definiert, wobei der Durchmesser (32) des Halbkreises die führende Fläche (8) des Stabes (2,2',2",2"') bildet und wobei der gekrümmte Umfang (34) des Halbkreises die nachfolgende Fläche (14) des Stabes (2,2',2",2"') bildet; oder
wobei in Bezug auf einen der oder mehrere der Stäbe (2,2',2",2"'), bevorzugt in Bezug auf alle Stäbe (2,2',2",2"'), der Querschnitt (20) des Stabes oder der Stäbe (2,2',2",2"') die Gestalt eines Dreiecks definiert, wobei eine Kante (36) des Dreiecks die führende Fläche (8) des Stabes (2,2',2",2"') bildet, und wobei Teile von zwei Kanten (38) und eine Spitze (40) des Dreiecks die nachfolgende Fläche (14) des Stabes (2,2',2",2"') bilden.

8. Sieb (100) nach einem der vorangehenden Ansprüche, wobei das Sieb (100) Einstellmittel zur Einstellung der gegenseitigen Abstände (d) zwischen zwei spezifischen benachbarten Stäben (2,2',2",2"'), bevorzugt zwischen jeden zwei benachbarten Stäben (2,2',2",2"'), umfasst.

9. Steinentnahmevorrichtung (200) zur Entnahme und zum Sammeln von Steinen (300) aus Erdboden;
wobei die Steinentnahmevorrichtung (200) einen Rahmen (42) umfasst;
wobei der Rahmen (42) ein Sieb (100) nach einem der vorangehenden Ansprüche umfasst;
wobei der Rahmen (42) Steinfördermittel (44) zum Entfernen von Steinen aus einem Bereich umfasst, der sich an einem oberen Ende (6) der Stäbe (2,2',2",2"') des Siebes (100) befindet.

10. Steinentnahmevorrichtung (200) nach Anspruch 9, die weiterhin Tiefeneinstellungsmittel (46) zur Einstellung der Eintauchtiefe des unteren Endes (4) der Stäbe (2,2',2",2"') des Siebes (100) in den Erdboden umfasst.

11. Steinentnahmevorrichtung (200) nach Anspruch 9 oder 10, die weiterhin einen Behälter (48) zum Lagern der Steine umfasst, die durch das Steinfördermittel (44) entfernt wurden; und/oder
wobei das Steinfördermittel (44) ein Förderband ist; und/oder
wobei der Rahmen (42) ein oder mehrere Räder (50) umfasst; und/oder
wobei die Vorrichtung eine selbstfahrende Vorrichtung ist oder wobei die Vorrichtung Kupplungsmittel (52) umfasst, die das Kuppeln der Vorrichtung an einen Schlepptraktor oder dergleichen ermöglicht; und/oder
wobei die Vorrichtung weiterhin ein Erdbodenlöse- und/oder Steinhebemittel (54) umfasst, das relativ zur vorgesehenen Bewegungsrichtung vor dem Sieb (100) angeordnet ist; wobei das Erdbodenlöse- und/oder Steinhebemittel (54) optional Scherelemente (56) umfasst, die auf einer Achse (58) angeordnet sind und die dazu gestaltet sind, dass sie rotieren können mit der Absicht, Erdboden zu lösen und/oder Steine, die im Erdboden vorhanden sind, vom Erdboden zu heben.

12. Verwendung eines Siebes (100) nach einem der Ansprüche 1-8 oder einer Vorrichtung (200) nach einem der Ansprüche 9-11 zur Entnahme von Steinen (300) aus Erdboden.

13. Verfahren zur Entnahme von Steinen (300) aus Erdboden, umfassend:
i) Bereitstellen eines Siebes (100) nach einem der Ansprüche 1-8;
ii) Anordnen des Siebes (100) derart, dass sein unteres Ende (4) zumindest teilweise in die Oberfläche des Erdbodens eintaucht;
iii) Bewegen des Siebes (100) durch den Erdboden in eine Richtung, die von der führenden Fläche (8) der Stäbe (2,2',2",2"') des Siebes (100) definiert ist;
iv) Sammeln und Entfernen von Steinen (300), die eine Größe haben, die sie daran hindert, zwischen zwei benachbarten Stäben (2,2',2",2"') hindurch zu gelangen, während es Erdbodenmaterial geringerer Größe ermöglicht wird, zwischen zwei benachbarten Stäben (2,2',2",2"') hindurch zu gelangen.

14. Verfahren nach Anspruch 13, die eine Vorrichtung (200) nach einem der Ansprüche 9-11 verwendet.

## Revendications

1. Tamis (100) permettant de ramasser des pierres (300) du sol, ledit tamis dans l'orientation prévue pour l'utilisation comprenant :
un nombre de barres (2, 2', 2", 2"'), chaque barre s'étendant dans une direction longitudinale entre une extrémité inférieure (4) configurée pour être au moins en partie enfoncée dans le sol, et une extrémité supérieure (6) ;
dans lequel chaque dite barre comprend une surface avant (8) s'étendant sur une distance (L) d'un premier bord (10) jusqu'à un second bord (12) de ladite surface avant de ladite barre ;
dans lequel chaque dite barre comprend une surface arrière (14) ;
dans lequel un ou plusieurs jeux de deux barres adjacentes (2, 2', 2", 2'"), de préférence tous les jeux de deux barres adjacentes du tamis sont groupés en paires de telle manière que les extrémités inférieures (4) de deux barres adjacentes sont connectées l'une à l'autre
**caractérisé en ce que,** concernant deux barres adjacentes spécifiques (2, 2', 2", 2"'), de préférence concernant toute paire de deux barres adjacentes, la géométrie des barres et du tamis est conçue de telle manière que la plus petite distance (D) entre lesdites deux barres adjacentes est présente uniquement à la position de la surface avant des dites deux barres adjacentes.

2. Tamis (100) selon la revendication 1, dans lequel une ou plusieurs des dites barres (2, 2', 2", 2"'), de préférence toutes lesdites barres, présentent une courbure concave dans le sens longitudinal le long de la surface avant (8) des dites barres ; et/ou
dans lequel une ou plusieurs des dites barres (2, 2', 2", 2"'), de préférence toutes les barres présentent une courbure convexe dans le sens longitudinal le long de la surface arrière (14) des dites barres.

3. Tamis (100) selon l'une quelconque des revendications précédentes, dans lequel lesdites barres (2, 2', 2", 2"') sont renforcées en étant reliées à un tasseau (18), ledit tasseau étant facultativement monté sur une surface arrière (14) des dites barres.

4. Tamis (100) selon l'une quelconque des revendications précédentes, dans lequel lesdites barres sont disposées de façon parallèle sur ledit tamis.

5. Tamis (100) selon l'une quelconque des revendications précédentes, dans lequel lesdites barres (2, 2', 2", 2'") ont une extension maximale de 0, 5 - 2,0 m, notamment de 0,6 à 1,9 m, par exemple de 0, 7 à 1,8 m, 0, 8 à 1,7 m, par exemple de 0,9 à 1,6 m, notamment de 1,0 à 1,5 m, par exemple de 1, 1 à 1,4 m ou de 1,2 à 1,3 m, et/ou
dans lequel l'épaisseur des barres (2, 2', 2", 2"'), dans une direction transversale par rapport à la direction de déplacement prévue, est de 10 à 65 mm, notamment de 15 à 60 mm, par exemple de 20 à 55 mm, de 25 à 50 mm, notamment de 30 à 45 mm ou de 35 à 40 mm,
et/ou
dans lequel, concernant une ou plusieurs des dites barres (2,2',2",2"'), de préférence concernant toutes lesdites barres, la plus petite distance (D) entre un bord de la surface avant d'une barre spécifique et le bord le plus proche de la surface avant d'une barre adjacente est de 2 à 65 cm, notamment de 5 à 60 cm, par exemple de 10 à 55 cm, notamment de 15 à 50 cm, par exemple de 20 à 45 cm, notamment de 25 à 40 cm ou de 30 à 35 cm.

6. Tamis (100) selon l'une quelconque des revendications précédentes, dans lequel, concernant une ou plusieurs des dites barres (2,2',2",2"'), de préférence concernant toutes lesdites barres, la distance mutuelle (d) entre une barre et sa barre adjacente, mesurée au niveau de la surface avant ou de la surface arrière varie le long de la longueur de ladite barre,
dans lequel la distance mutuelle (d) entre une barre (2,2',2",2"') et sa barre adjacente varie facultativement sur la longueur de ladite barre de façon à augmenter en partant d'une extrémité inférieure (4) de ladite barre jusqu'à une extrémité supérieure (6) de ladite barre ou de façon à diminuer en partant d'une extrémité inférieure (4) de ladite barre jusqu'à une extrémité supérieure (6) de ladite barre.

7. Tamis (100) selon l'une quelconque des revendications précédentes, dans lequel, concernant une ou plusieurs des dites barres (2,2',2",2"'), de préférence concernant toutes les dites barres, la section transversale (20) de ladite (des dites) barre(s) définit la forme d'un trapèze isocèle ayant des côtés (22) de longueur égale, dans lequel la base la plus longue (24) du trapèze isocèle forme la surface avant (8) de la barre et dans lequel la base la plus courte (26) du trapèze isocèle forme la surface arrière (14) de la barre, s'étendant ainsi entre un premier bord (28) et un second bord (30) de ladite surface arrière de ladite barre ; ou
dans lequel, concernant une ou plusieurs des dites barres (2,2',2",2"'), de préférence concernant toutes les dites barres, la section transversale (20) de ladite (des dites) barre(s) définit la forme d'un demi-cercle, dans lequel le diamètre (32) du demi-cercle forme la surface avant (8) de la barre et le périmètre curviligne (34) du demi-cercle forme la surface arrière (14) de ladite barre ; ou
dans lequel, concernant une ou plusieurs des dites barres (2,2',2",2"'), de préférence concernant toutes lesdites barres, la section transversale (20) de ladite (des dites) barre(s) définit la forme d'un triangle, dans lequel un côté (36) du triangle forme la surface avant (8) de la barre, et une partie de deux côtés (38) et un sommet (40) du triangle forment la surface arrière (14) de la barre.

8. Tamis (100) selon l'une quelconque des revendications précédentes, dans lequel ledit tamis comprend des moyens de réglage pour régler les distances réciproques (d) entre deux barres adjacentes spécifiques (2,2',2",2"'), de préférence entre toutes paires de deux barres adjacentes.

9. Dispositif de ramassage de pierres (200) permettant de ramasser et rassembler des pierres (300) du sol,
dans lequel ledit dispositif de ramassage de pierres comprend un cadre (42),
dans lequel ledit cadre comprend un tamis (100) selon l'une quelconque des revendications précédentes ;
dans lequel ledit cadre comprend des moyens de transport de pierre (44) permettant d'enlever des pierres d'une zone située à une extrémité supérieure (6) des dites barres du dit tamis.

10. Dispositif de ramassage de pierres (200) selon la revendication 9, comprenant en outre des moyens de réglage de profondeur (46) pour régler la profondeur d'enfoncement dans le sol de l'extrémité inférieure (4) des dites barres du dit tamis.

11. Dispositif de ramassage de pierres (200) selon la revendication 9 ou 10, comprenant en outre une trémie (48) pour stocker les pierres enlevées par les moyens de transport de pierres, et/ou
dans lequel les moyens de transport de pierres sont une bande transporteuse,
et/ou dans lequel ledit cadre comprend une ou plusieurs roues (50) ; et/ou
dans lequel ledit dispositif est un dispositif automoteur ou dans lequel ledit dispositif comprend des moyens d'accouplement (52) permettant l'accouplement du dispositif à un tracteur de remorquage ou similaire ; et/ou
dans lequel ledit dispositif comprend en outre des moyens d'ameublissement du sol et/ou de levage de pierres (54) disposés à l'avant du tamis (100), par rapport à la direction de déplacement prévue de celui-ci, les dits moyens d'ameublissement et/ou de levage de pierres (54) comprenant facultativement des cisailles (56) disposées sur un essieu (58) et étant configurées pour pouvoir tourner afin d'ameublir le sol et/ou de soulever du sol des pierres présentes dans le sol.

12. Utilisation d'un tamis (100) selon l'une quelconque des revendications 1 à 8 ou d'un dispositif (200) selon l'une quelconque des revendications 9 à 11 pour ramasser des pierres (300) du sol.

13. Procédé pour ramasser des pierres du sol, dans lequel ledit procédé comprend les opérations consistant à :
i) fournir un tamis (100) selon l'une quelconque des revendications 1 à 8 ;
ii) disposer ledit tamis de telle manière que son extrémité inférieure soit au moins en partie enfoncée dans la surface du sol ;
iii) déplacer le tamis à travers le sol dans une direction définie par la surface avant des barres du tamis (100) ;
iv) rassembler et enlever les pierres (300) ayant une dimension qui les empêche de passer à travers deux barres adjacentes (2,2',2",2"'), tout en permettant au matériau du sol ayant une dimension plus petite de passer entre deux barres adjacentes (2,2',2",2"').

14. Procédé selon la revendication 13, utilisant un dispositif (200) selon l'une quelconque des revendications 9 à 11.
